(19) **Europäisches Patentamt**
**European Patent Office**
**Office européen des brevets**

(11) **EP 3 665 580 B1**

(12) **EUROPEAN PATENT SPECIFICATION**

(45) Date of publication and mention
of the grant of the patent:
**08.03.2023   Bulletin 2023/10**

(21) Application number: **17749457.2**

(22) Date of filing: **08.08.2017**

(51) International Patent Classification (IPC):
**G06F 12/0866** (2016.01)      **G06F 12/0886** (2016.01)
**G06F 12/0895** (2016.01)

(52) Cooperative Patent Classification (CPC):
**G06F 12/0886;** G06F 12/0895; G06F 2212/1024;
G06F 2212/173

(86) International application number:
**PCT/EP2017/070026**

(87) International publication number:
**WO 2019/029793 (14.02.2019 Gazette 2019/07)**

(54) **METHOD OF OPERATING A CACHE**

VERFAHREN ZUM BETRIEB EINES CACHE

PROCÉDÉ DE FONCTIONNEMENT D'UNE MÉMOIRE CACHE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.06.2020   Bulletin 2020/25**

(73) Proprietor: **Continental Automotive Technologies
GmbH
30165 Hannover (DE)**

(72) Inventor: **IBAYAN, Ariel
Melbourne, Victoria 3103 (AU)**

(74) Representative: **Continental Corporation
c/o Continental Teves AG & Co. OHG
Intellectual Property
Guerickestraße 7
60488 Frankfurt a. Main (DE)**

(56) References cited:
**US-A1- 2003 005 230      US-A1- 2008 148 002
US-A1- 2009 276 602      US-A1- 2013 046 951
US-B1- 8 705 527**

- **LEISERSON C E ET AL: "USING DE BRUIJN
SEQUENCES TO INDEX A 1 IN A COMPUTER
WORD", INTERNET CITATION, 7 July 1998
(1998-07-07), XP002414284, Retrieved from the
Internet:
URL:http://citeseer.ist.psu.edu/cache/pape
rs/cs/3312/ftp:zSzzSztheory.lcs.mit.eduzSz
pubzSzcilkzSzdebruijn.pdf/leiserson98using .pd
f [retrieved on 2006-12-18]**
- **Anonymous: "Bit Twiddling Hacks", , 31 July
2017 (2017-07-31), XP055795680, Retrieved from
the Internet:
URL:https://web.archive.org/web/2017073104
2224/http://graphics.stanford.edu/~seander
/bithacks.html [retrieved on 2021-04-15]**
- **Anonymous: "De Bruijn sequence - Wikipedia", ,
24 June 2017 (2017-06-24), XP055795687,
Retrieved from the Internet:
URL:https://en.wikipedia.org/w/index.php?t
itle=De_Bruijn_sequence&oldid=787334466
[retrieved on 2021-04-15]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

This invention relates to storage means for digital information and processing of digital information.

BACKGROUND OF INVENTION

In today's computer systems, processor speeds are typically much faster than the capabilities of the main memory. Thus, there is usually latency when retrieving the main memory data demanded by the processor. High-speed memory or cache memory is used to overcome such latency. Cache memory works by duplicating often-used or recently used data from the main memory. Cache memory is a block of memory located in or near the processor. Therefore the step of retrieving such data from a remote or separate memory is eliminated.

However, processor circuit technology and the associated cost limits the size of cache memories. Thus, due to limited cache memory, data in the cache memory is constantly replaced once the cache memory is filled. When the processor requests data from memory, the cache memory is first tested and if found there, the data is retrieved from the cache memory and execution resumes; otherwise, the processor proceeds to request and obtain data from the slower main memory. Identifying the data stored in the cache as quickly and efficiently as possible is therefore pertinent in reducing latency.

To run computer programs or applications, the memory needs of some programs or processes can only be determined during runtime, e.g. when the memory needed depends on user input. Thus, the program or process needs to dynamically allocate memory and such allocated memory is called the heap. Some of the heap may be stored in the cache, while some may be stored in random access memory. Cache memory is made up of memory units, the smallest memory unit being a cache line. Cache lines are typically allocated for a predetermined size of memory in the heap and are held in a pool. While latency due to retrieving data from a remote or separate memory is reduced by use of the cache, overheads due to associating, fetching and managing cache lines exist, especially when the size of the cache memory and number of cache lines increase. It is possible to increase the overall memory in the cache by, for example, allocating more memory from the main storage medium to the cache. However, an increase in the memory of the cache module means an increase in the number of cache lines . If the size of the cache memory and number of cache lines increase, the overhead needed to search and fetch cache lines will accumulate and may lead to significant performance issues. Cache lines are typically indexed for efficient and systematic management. Since cache lines are dynamically allocated, there should be an efficient way of determining which cache lines are available or used. Current methods involve the use of a loop either by directly accessing each cache line to determine availability or by manipulating bitmap representations of each bit to determine availability. However, loops can be taxing on the processor as the cache becomes full or as the size of the cache increases.

There is therefore a need to provide improved architecture and methods of operating the cache memory that overcome or at least ameliorate one or more of the disadvantages discussed above. US 2003/005230 A1, discloses a method for storing a single tag along with a pointer to the actual data which is stored in a separate array which includes several lines. Each data block may have a variable length and occupy several lines. These lines are linked together to form a linked list. An invalidation mechanism allows invalidation of lines of the same data block, increasing data efficiency.

US 2009/276602 A1 discloses a memory management system includes an allocator which processes memory blocks. When an object is no longer used by a process, the space freed can be merged with adjacent free spaces and can be returned to the operating system. To search for adjacent free spaces, the Bruijn sequence algorithm is used, applied to the bit field disposed in each predetermined memory region.

US 2008/148002 A1 discloses a method, system and program are provided for allocating a data structure to memory by selecting a page of memory having a free entry, allocating the free entry for exclusive storage of a data element in the data structure, and then updating control information on the selected page with management data specifying that the free entry is allocated.

The invention is defined in the appended claims. The dependent claims set out particular embodiments.

It is therefore an object of this invention to provide a method of operating a cache module to address the problems discussed above. Particularly, it is an object of this invention to provide a method of operating a cache module with decreased latency. It is a further object of this invention to provide a method of operating a cache module without the use of unnecessary loops and traversals. It is a further object of this invention to provide a cache module that efficiently and systematically operates its cache lines.

To accomplish these and other objects of the invention, there is provided, in a first aspect, a method of operating a cache module comprising cache lines which are the smallest memory blocks of the cache module, wherein the method comprises a step of receiving an incoming message for storing, the step of receiving comprising: determining size of the message to in turn determine number of cache lines required for the message; finding available cache lines required for the determined number of cache lines, wherein the step of finding comprises: i. utilizing an algorithm using a de Bruijn sequence to find an available first cache line by determining the location of a least significant bit of value 1 of an integer that is a binary representation of which cache lines are free or used, wherein the least significant bit of value 1 identifies the location of the available first cache line; ii. storing the message or, if more than one cache line is required, part of the message in the first cache line in the cache module; iii. storing the location of the first cache line in a lookup table indexing details of the stored message; iv. repeating steps i to iii if more than one cache line is required for the message.

The term "cache module" refers to a memory component whose function is to store data or information that may be used again, typically in a pool, so that future requests for that data or information may be met or retrieved faster. The cache module may have a higher access speed than a main storage medium. The data or information stored in the cache module may also be stored in the main storage medium. Thus, the data or information stored in the cache module may be a subset of the contents in the main storage medium. Memory in the cache module is typically volatile or transitory or non-persistent; that is, data stored in the cache module may be replaced. The terms "cache module", "cache memory" and "cache" as used herein are interchangeable.

The cache module is made up of blocks of a fixed memory size. Each block or unit of memory is called a cache line and each cache line is of the same size. The size of each memory block or cache line is dependent on the application of the cache module, although exemplary sizes of each memory block or cache line may range from 1 byte to several bytes . Should the data or information that needs to be stored be greater than the cache line size, the data or information is split up to chunks and stored in multiple cache lines, wherein each chunk is within the size of each cache line.

The main storage medium may be a separate component from the cache module. In this example, the main storage medium may include disk storage media such as hard disk drives, or solid-state storage media such as flash memory, while the cache module may be located on a CPU chip. In another example, the cache module and the main storage medium may be located in separate zones of the same component, such as for example a disk drive comprising a disk cache. In yet another example where there is a finite or fixed or limited number of processes and messages, the only storage medium may be the cache module, such as for example a processor cache. Thus, the main storage medium may be optional, although generally the main storage medium is included as other types of storage medium, e.g. cache storage, are more expensive for the same size.

The term "operating", or grammatical variants thereof, as used herein in relation to manipulating of a cache module is to be broadly interpreted as including, but not limited to, reading data in the cache module, storing or writing data into the cache module, deleting or clearing data from the cache module, finding data in the cache module, organizing data in the cache module, and/or otherwise managing the cache module.

The term "message" broadly refers to data, such as a file or a portion of a stream of data, which may be transmitted between computing devices or software applications.

As used herein, the term "computing system" or terms to such effect, e.g. "computing device", broadly refer to any computer device comprising at least a processor, cache module, input/output elements such as inputs configured to receive data from sensors, digital input from a human-machine interface, display output and drivers, and optionally a main memory or main storage medium. An example of a computing system includes, but is not limited to, an electronic control unit in an automotive network.

As can be appreciated, the overall memory of the cache module can be increased to improve the performance of the computing system so that, for example, a larger number of messages can be transmitted or handled. An increase in the overall memory of the cache module means an increase in the number of cache lines.

Advantageously, the disclosed method of operating a cache module and its cache lines is substantially independent of the overall size of the cache pool in the cache module because the disclosed method does not involve checking each cache line for its availability or for the message stored therein. Instead, the disclosed method utilizes the disclosed algorithm to determine the location of the least significant bit which indicates the cache lines that are used or available.

The least significant bit refers to the integer in the right-most bit of a multi-bit binary number since the right-most integer is the integer in the ones position. Conversely, the most significant bit refers to the integer in the left-most bit of the multi-bit binary number.

In the context of the present application and for consistency, a bit having a value of 1 refers to an available cache line that can be used for storing data, while a bit having a value of 0 refers to a cache line that has data stored therein. However, such terminology is relative and in an unclaimed embodiment of the present application a bit having a value of 0 could refer to an available cache line that can be used for storing data, and thus in this context, a bit having a value of 1 would refer to a cache line that has data stored therein.

Finding the location of the least significant bit of value 1 or 0 therefore provides a way of systematically identifying which cache line is available or used, respectively.

When there is an incoming message, e.g. a temperature reading from a temperature sensor or data entered into the computing system by a user, the message may need to be parked somewhere for future retrieval or use. Thus, the message may be parked or stored in the main memory or the cache module. In an example, the message is parked or stored in the cache module. Cache line (s) in the cache module that are available for message storage therefore need to be found. According to the disclosed method, the size of the message is first determined so that the number of cache line(s) required for storing the message can be determined.

Available cache line(s) may then be found by means of the algorithm using de Bruijn sequences.

A description of such a multiply and lookup algorithm using de Bruijn sequences can be found in the document "Using de Bruijn Sequences to Index a 1 in a Computer Word", Charles E. Leiserson, Harald Prokop, Keith H. Randall, MIT Laboratory for Computer Science, Cambridge, MA 02139 USA, July 7 1998 and Stanford University's webpage at http://graphics.stanford.edu/~seander/bithacks.html#IntegerLo gDeBruijn. The de Bruijn sequence and its derivation will therefore not be described here. The webpage describes a sample operation or function for determining the position of the least significant bit of value 1 for 32 bit integers. The sample function is shown below:

```
unsigned int v;
int r;

static const int MultiplyDeBruijnBitPosition[32] =
{
  0, 1, 28, 2, 29, 14, 24, 3, 30, 22, 20, 15, 25, 17, 4, 8,
  31, 27, 13, 23, 21, 19, 16, 7, 26, 12, 18, 6, 11, 5, 10, 9
};

r = MultiplyDeBruijnBitPosition[((uint32_t)((v    &   -v)   *
0x077CB531U)) >> 27];
```

where the hexadecimal value 0x077CB531U is a de Bruijn sequence.

Briefly and exemplarily, utilizing the multiply and lookup algorithm using de Bruijn sequences to find an available first cache line by determining the location of the least significant bit of value 1 may comprise: (1) computing $y = v$ & $(-v)$, wherein $v$ is a binary representation of which cache lines are free or used (e.g. the binary values in the bitmap or in the cache line as disclosed herein) and $-v$ is the 1's complement of the binary representation; (2) computing an n-order de Bruijn sequence on a size-k alphabet, where $k$ is the number of cache lines being used (i.e. the number of binary values in the bitmap or the size of the bitmap) and $n = \lg k$; (3) constructing a hashing table listing the rotated n-bit substrings in ascending order with each n-bit substring indexed sequentially; (4) multiplying $y$ and the de Bruijn sequence to yield a multiplication product; (5) computing $x = k - (\lg k)$; (6) truncating the lower x-bits of the multiplication product; and (7) retrieving the value indexed by the result in (6) from the hashing table, the value being the location of the least significant bit of value 1.

The time required for the computing system to perform the steps of the algorithm is essentially fixed. Thus, in contrast with looping algorithms, the disclosed method is advantageously not dependent on the size or state of the cache module. Further advantageously, the disclosed method utilizes a predictable system load and provides a method that is scalable with the size of the cache module. Performance of the system may be controlled even when increasing the size of the cache pool. An efficient method of locating resources and managing cache lines is therefore provided. An efficient method of managing the sequence of cached messages is also provided. The disclosed method advantageously provides for associating and fetching cache lines for sequential messages without the use of any loops.

Once an available cache line is found, the incoming message may be stored in this first available cache line.

In instances where the incoming message requires more than one cache line for storage, a first part of the message may be stored in the first available cache line. The algorithm may then be used to find a second available cache line by determining the location of the next least significant bit of value 1 and the second part of the message is stored in the second available cache line. The process continues until the final $n^{th}$ part of the message is stored in an $n^{th}$ available cache line.

A lookup table indexes details of all messages stored in or used by the cache module and therefore may be termed as "message lookup table". Advantageously, the message lookup table keeps a record of the details of the messages stored or associated with cache lines. Further advantageously, messages that are stored in the cache module may be summarized in the lookup table. Yet further advantageously, messages stored in the cache module may be easily or efficiently found and retrieved by means of the lookup table. The lookup table may also be known as a message lookup table. The lookup table may index or list the stored messages sequentially, e.g. Message Index 0, Message Index 1, etc. Details of the messages stored in the lookup table may include the size of the message or the number of cache lines required for the message. The details may include the sequence number (which is n) of the final $n^{th}$ part of the message. The details may include the location of the first cache line containing the message or the first part of the message, e.g. Next Cache Index is 3 if the first part of the message is stored in cache line no. 3. The details may include the location of the final $n^{th}$ cache line containing the final $n^{th}$ part of the message, e.g. Last Cache Index is 1 if the final part of the message is stored in cache line no. 1. The details may optionally include the location of the second, third, fourth, ... and $(n-1)^{th}$ cache lines containing the second, third, fourth, ... and $(n-1)^{th}$ parts of the message, respectively.

Each cache line may be available for storage or may be used by a message or part of the message stored therein. The cache pool may be indexed such that each cache line has an index number, e.g. cache line no. 1 has index number of Cache Index 1. Each cache line may store the message index of the message associated with the cache line, e.g. if the message or part of the message stored in cache line no. 1 is indexed as message no. 0, Message Index 0 is recorded in Cache Index 1. Each cache line may also store the sequence number of the part of the message, e.g. if the $n^{th}$ part of a message is stored in cache line no. 4, SQN n is recorded in Cache Index 4. Each cache line may also store the location of the next cache line containing the next $(n+1)^{th}$ part of the message, e.g. if the $n^{th}$ part of the message is stored in cache line no. 6 and the final $(n+1)^{th}$ part of the message is stored in cache line no. 2, Next Cache Index 2 is recorded in Cache Index 6. Each cache line may also store an indication of whether it is available or used, e.g. if cache line no. 3 is used or available, the binary 0 or 1, respectively, is recorded in Cache Index 3. Where the cache line is not associated with any message or part of any message, the entry or entries in the cache line may so indicate, e.g. if cache line no. 1 is available, Cache Index 1 may indicate that the data therein is invalid, the Message Index is invalid, the SQN is invalid, the Next Cache Index is invalid, and the binary value is 1. Accordingly, when there is an incoming message, the message may need to be stored in the cache line(s) of the cache module for future retrieval or use. The first cache line is found by means of the algorithm. The index number of this first cache line may be stored in the lookup table. Where more than one cache line is required for the message, the next cache line is found by means of the algorithm. The index number of the next cache line may be stored in the lookup table and in the first cache line, the sequence number increased in the lookup table, and the updated sequence number and other data stored in this next cache line.

It will be understood that one, some or all details disclosed herein may be included in the lookup table or stored in the cache line.

In instances where the cache line stores the location of the next cache line containing the next part of the message, the lookup table may simply include the location of the first and final $n^{th}$ cache line and may not include the location of the second, third, fourth, ... and $(n-1)^{th}$ cache lines containing the second, third, fourth, ... and $(n-1)^{th}$ parts of the message, respectively, since such details are recorded in the cache line. In other instances, the cache line may store the location of the next cache line containing the next part of the message and the lookup table may also store the location of the first, second, third, ... and final $n^{th}$ cache line.

In some instances the lookup table may further comprise a bitmap indicating which cache lines are available or used. The bitmap may be used to keep a record of the status of each cache line, i.e. whether each cache line is available or used. The bitmap may indicate the binary 0 if the cache line is used or the binary 1 if the cache line is available, or vice versa. The bitmap may also be known as a cache status bitmap. Advantageously, the algorithm may use the binary values stored in the bitmap to locate the least significant bit of value 1 or 0. In instances where the bitmap is not included and each cache line stores the indication of whether it is available or used, the algorithm may use the binary values stored in the cache line to locate the least significant bit of value 1 or 0.

The disclosed method may further comprise: receiving a request for retrieval of the stored message; and retrieving the stored message by means of the lookup table. The disclosed method may further comprise sending the retrieved message to an output element or interface, such as a driver, or providing the retrieved message for sending or allowing the retrieved message to be available to another module or computing system for processing of the message. Advantageously, messages in the cache module are organized or tracked by means of the lookup table, which enables efficient retrieval of messages in the cache module without looping algorithms to search each cache line.

In an example, one or more messages stored in the cache module may be retrieved upon request from another computing system. For example, a processor of a vehicle door control unit or control module receives a message to unlock the vehicle door. The processor may find available cache line(s) according to the disclosed method to store the "unlock" message in a cache module of the door control unit. In response to the "unlock" message, the processor may instruct a driver of the door control unit to retrieve the "unlock" message from the cache module, then cause unlocking of the vehicle door. Further, in response to the "unlock" message, the door control unit may send a message to a seat control unit or control module to move the seat back so that leg room is increased for a vehicle user to enter the seating area easily. A processor of the seat control unit may find available cache line (s) according to the disclosed method to store the "move back" message in a cache module of the seat control unit. A driver of the seat control unit may request the processor for the "move back" message and the processor may retrieve the message by means of the disclosed lookup table. The "move back" message may be sent to the driver to cause the vehicle seat to move back. The door control unit and the seat control unit may be electronically connected to each other or may be in electronic communication with each other by way of, e.g., a data bus system.

In instances where there is a finite number of computing systems or control modules and therefore finite number of messages, e.g. in a local area network or a controller area network, messages coming from a specific module may be designated a specific message index in the lookup table. Accordingly, the same message or different messages from the same module may be stored in the same message index for consistency and systematic management, although the cache line(s) storing the message or messages from the same module may differ as determined by the disclosed method. For example, messages from Module 1 connected to the system via a USB may be stored in Message Index 1, while messages from an Ignition Control Module may be stored in Message Index 2. In other instances, the same message or different messages from the same module may not be stored in the same message index. In such cases, the method may further comprise step(s) for determining which modules use which message index. In instances, the disclosed method may be used in other suitable systems where the messages transmitted can be indexed or positioned or fitted into a lookup table.

The cache module may be part of an electronic control unit. The disclosed method may be undertaken by a processor of the electronic control unit.

The cache module may be used for temporary storage of messages. Thus, messages stored in the cache lines may be cleared so that the cache lines may be used for storage of new incoming messages . The sequence of the clearing step may not be so limited as long as new message (s) are able to be stored in the cache module. Some known algorithms to select messages for clearance or replacement include First-In-First-Out, Least Recently Used and Least Recently Replaced. Clearing or cleaning up the cache line may comprise resetting the values or details in the cache line to their initial values, wherein the initial values may be "invalid". A cleared cache line means that the details therein may no longer be useful and the cache line may be suitable for new data to be written or stored therein.

In some instances, the disclosed method may further comprise clearing the message stored in the at least one cache line after the step of retrieving. Accordingly, the stored message may be cleared from the cache line (s) associated with it once the message is retrieved for use. In other instances, the disclosed method may further comprise clearing the message stored in the at least one cache line before the step of storing the message or part of the message. In such instances, clearing of the cache line (s) may be conducted before new messages require the cache.

There is provided, in another aspect, a computer program product residing on a non-transitory computer readable storage medium in an electronic control unit, the storage medium having a plurality of instructions stored thereon which, when executed by a processor of the electronic control unit, cause the processor to perform the disclosed method.

The non-transitory computer readable storage medium may be a memory component or part of a memory component whose memory is non-volatile or persistent. The non-transitory computer readable storage medium may be part of the main storage medium or main memory.

In addition to a non-transitory computer readable storage medium and a processor, the electronic control unit may comprise a transitory computer readable storage medium comprising the cache module and software including an operating system stored in one or both of the computer readable storage medium. The electronic control unit may further comprise elements typical of such control units, such as input/output devices and transistors. The electronic control unit may control parts of a vehicle including, but not limited to, watercraft, land vehicles, aircraft and spacecraft. The transitory and non-transitory computer readable storage medium may be separate components or separate zones on the same component as disclosed herein.

Accordingly, there is provided, in another aspect, an electronic control unit comprising: a processor configured to perform the disclosed method; computer readable storage medium comprising a non-transitory portion and a transitory portion, the non-transitory portion comprising the disclosed computer program product and the transitory portion comprising the cache module; and circuitry configured to transmit at least one message and at least one instruction.

The transitory and non-transitory portions, as disclosed herein, may be separate components or separate zones on the same component.

The circuitry may include input/output devices or circuitry, relays and other peripheral circuitry or electrical connections connecting the components of the electronic control unit to transmit the message or instruction or other electronic or digital information.

The electronic control unit may be part of a network, for example, although not limited to, a local area network or a controller area network.

A Controller Area Network (CAN) is a serial bus or communication network that connects, for example, devices, sensors, and actuators in various control applications in a distributed environment (e.g. automotive, industrial automation, avionics, medical and office equipment, consumer appliances, etc.).

Usually, a CAN network is used for transferring, transmitting and receiving information to and from sensors and actuators for real-time control applications. In automotive control applications, a control network enables communication between multiple nodes or control units, e.g. a door control unit and a seat control unit. In some instances, there may be a control unit within the control network that acts as the master or brain among the multiple control units . For a vehicle, the brain may be termed as the vehicle control unit.

Accordingly, there is provided, in another aspect, a vehicle control unit comprising a plurality of electronic control units as disclosed herein in electronic communication with each other by way of a data bus system. The plurality of electronic control units may be in electronic wireless communication with each other.

Typical data bus systems include a CAN bus, a local interconnect network (LIN) bus, or a universal serial bus (USB), although other suitable bus systems are within the scope of the present application.

BRIEF DESCRIPTION OF DRAWINGS

Fig. 1 shows a flowchart of a method (100) of operating a cache module (400) comprising cache lines which are the smallest memory blocks of the cache module (400), according to a first embodiment of this invention.

Fig. 2 shows an illustration of a lookup table (300), bitmap and indexed cache pool stored in a cache module (400) according to an embodiment of this invention.

Fig. 3 shows a flowchart of receiving (110) an incoming message 200 for storing in the cache module (400) according to the first embodiment of this invention.

Fig. 4 shows a flowchart of retrieving (120) and clearing (130) the stored message 200 from the cache module (400) according to the first embodiment of this invention.

DETAILED DESCRIPTION OF DRAWINGS

Hereinafter, exemplary embodiments of the present invention will be described in detail with reference to the accompanying drawings. The detailed description of this invention will be provided for the purpose of explaining the principles of the invention and its practical application, thereby enabling person skilled in the art to understand the invention for various exemplary embodiments and with various modifications as are suited to the particular use contemplated. The detailed description is not intended to be exhaustive or to limit the invention to the precise embodiments disclosed.

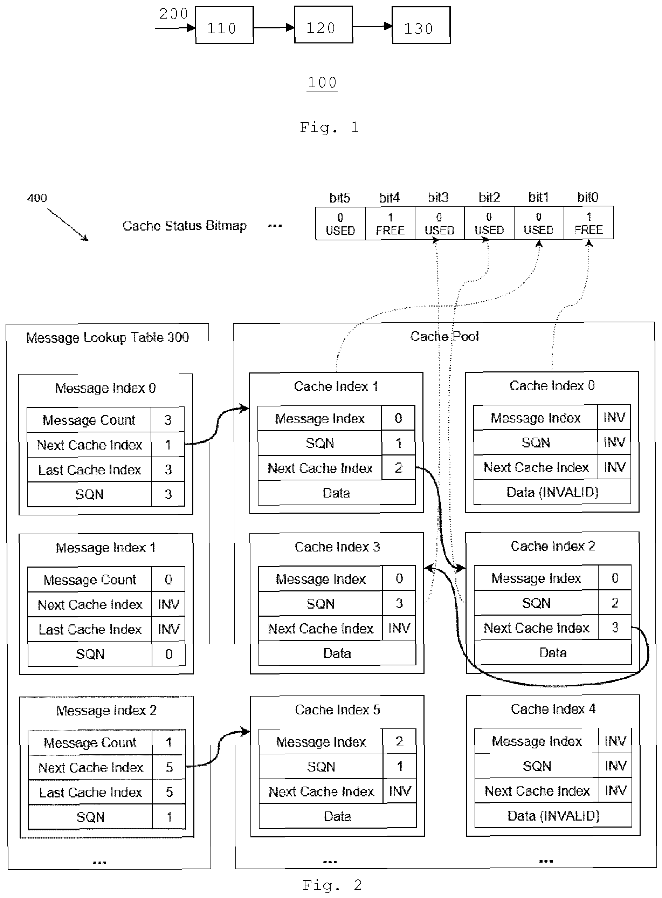

Fig. 1 shows a flowchart of a method (100) of operating a cache module (400) comprising cache lines which are the smallest memory blocks of the cache module (400), according to a first embodiment of this invention. The method (100) comprises, among others, a step (110) of receiving an incoming message 200 for storing in the cache module (400), a step (120) of retrieving the stored message 200 from the cache module (400) and a step (130) of clearing the stored message 200 from the cache module (400).

The method (100) involves the use of a lookup table (300) to index details of the stored message 200 and cache lines which are indexed. The lookup table (300) further comprises a bitmap indicating which cache lines are available or used. An illustration of the lookup table (300), bitmap and indexed cache pool stored in a cache module (400) according to an embodiment of the invention is shown in Fig. 2.

As seen in Fig. 2, the message lookup table (300) lists each stored message sequentially as Message Index 0, Message Index 1, Message Index 2, and so on. In each message index, the size of the message stored in that message index is entered under Message Count. For example, the message stored in Message Index 0 requires three cache lines and thus Message Count is entered as 3. In each message index, the location of the first cache line containing the first part of the message and last cache line containing the final part of the message is entered under Next Cache Index and Last Cache Index, respectively. For example, the location of the first cache line containing the first part of the message stored in Message Index 0 is in cache line no. 1 and thus Next Cache Index is entered as 1, while the location of the last cache line containing the last part of the message stored in Message Index 0 is in cache line no. 3 and thus Last Cache Index is entered as 3. In another example, the message stored in Message Index 2 requires only one cache line and thus the location of the first cache line and last cache line reflects the same cache line no. 5, i.e. Next Cache Index and Last Cache Index are entered as 5. Finally, in each message index, the sequence number of the last part of the message stored in that message index is entered under Last SQN. For example, the message stored in Message Index 0 requires three cache lines and thus the last part of the message is stored in the third cache line, i.e. Last SQN is entered as 3. Where a message index is not used for any message, as shown in Message Index 1, Next Cache Index and Last Cache Index are entered as invalid or INV, while Message Count and Last SQN are entered as 0.

As mentioned herein and with reference to Fig. 2, each cache line is indexed with an index number, making up an indexed cache pool. Each cache line stores data (the message) as well as details of the data. Details of the data include the message index associated with the data stored in that cache line, the sequence number of the part of the message stored in that cache line and the location of the next cache line for the next part of the message. Referring to the message in Message Index 0 whose first cache line is Cache Index 1, Cache Index 1 in the indexed cache pool states a reference to Message Index 0, states that this is the first part of the message, i.e. SQN is 1, states the location of the second cache line which happens to be cache line no. 2, i.e. Next Cache Index is 2, and contains the data in the first part of the message of Message Index 0. For the second part of the message in Message Index 0, Cache Index 2 states a reference to Message Index 0, states that this is the second part of the message, i.e. SQN is 2, states the location of the third cache line which happens to be cache line no. 3, i.e. Next Cache Index is 3, and contains the data in the second part of the message of Message Index 0. For the third and final part of the message in Message Index 0, Cache Index 3 in the indexed cache pool contains the data in the third part of the message of Message Index 0, states a reference to Message Index 0, states that this is the third part of the message, i.e. SQN is 3, and states the location of the next cache line in which there is none and thus Next Cache Index is invalid or INV. Accordingly, it can be seen that Cache Index 1, 2 and 3 are used by Message Index 0 and Cache Index 5 is used by Message Index 2, while Cache Index 0 and Cache Index 4 are available for storage of new messages.

Therefore, the cache status bitmap states that bit 0 and bit 4, which corresponds respectively to Cache Index 0 and Cache Index 4, are free and have a binary value of 1, while the rest of the bits and cache indices are used and have a binary value of 0.

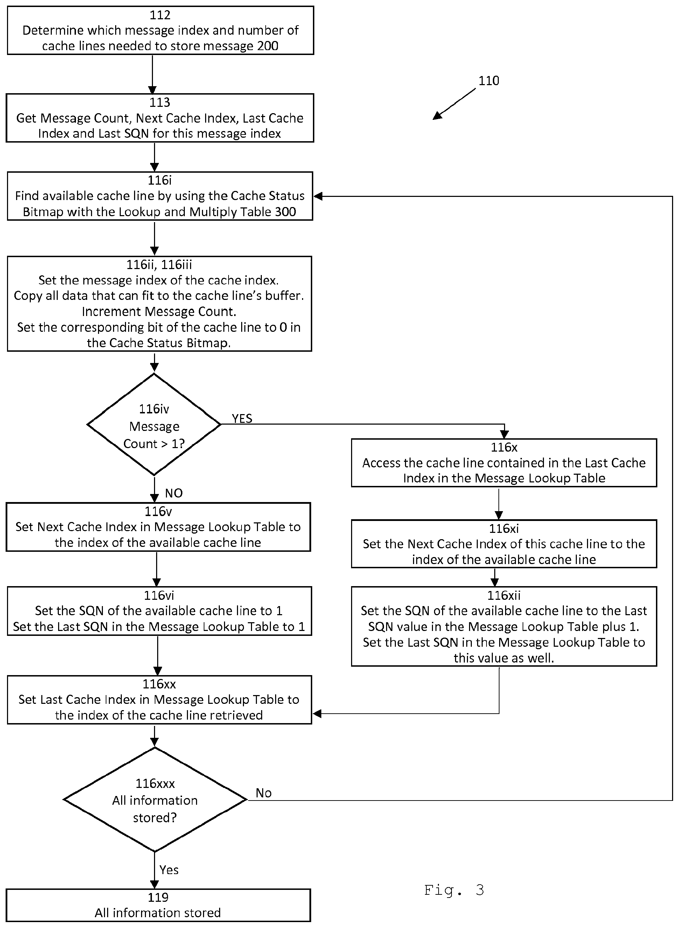

The step (110) of receiving the incoming message 200 for storing in the cache module (400) is now explained with reference to the flowchart in Fig. 3. The algorithm of step (110) broadly comprises: determining (112) size of the message 200 to in turn determine number of cache lines required for the message 200; finding (116) available cache lines required for the determined number of cache lines, wherein the step (116) of finding comprises: i. utilizing (116i) an algorithm using a de Bruijn sequence to find an available first cache line by determining the location of a least significant bit of value 1; ii. storing (116ii) the message 200 or, if more than one cache line is required, part of the message 200 in the first cache line in the cache module (400); iii. storing (116iii) the location of the first cache line in a lookup table (300) which indexes details of the stored message 200; iv. repeating steps i to iii if more than one cache line is required for the message 200. Each step is explained in detail as follows.

The step (110) first comprises the step (112) of determining the size of the incoming message 200 and the number of cache lines required to store message 200.

Step (112) may further comprise checking or scanning the lookup table (300) to determine whether the message 200 had previously been saved in a message index in the cache module (400), e.g. if a temperature reading from a temperature sensor had previously been saved in the cache module (400).

If the message 200 does not exist in any message index in the cache module (400), the "Message Count", "Next Cache Index", "Last Cache Index" and "Last SQN" are skipped or deemed invalid in step (113) . If the message 200 does not exist in the cache module (400), an available first cache line is found in step (116i) by utilizing the disclosed algorithm to find the location of a least significant bit of value 1. In step (116ii), the message 200 or part of message 200 is stored or copied in the first cache line that was found. In step (116iii), the message 200 is assigned a message index in the lookup table (300) and this message index is referenced and recorded in the first cache line, and the corresponding bit of the cache status bitmap is set to 0 or used. This is the first time that a cache line is associated to this particular message index, so Message Count in the lookup table (300) is incremented to 1. Since Message Count is not more than 1, the check in step (116iv) would fail and the process will proceed to step (116v). In step (116v), the Next Cache Index in the lookup table (300) is set to the index of the cache line retrieved in step (116i) . The SQN of the cache line and the Last SQN of the lookup table (300) are updated to 1 in step (116vi) to show that this is the first part of the message being stored. The Last Cache Index in the message lookup table (300) is then updated with the index of the most recently added cache line in step (116xx) . That is, as there is only one cache line associated at this time, the Next Cache Index and Last Cache Index in the lookup table (300) refer to the same cache line.

In step (116xxx), a check is performed to verify if all the information needed in message 200 has been stored. If all the information has been stored as per step (119), the process of step (110) ends. If not, then the information needs to be stored in multiple cache lines, and the process goes back to step (116i) . The Message Count in the lookup table (300) is incremented to 2 and thus step (116iv) would lead to step (116x) instead, where the cache line holding the last part of the message that was previously saved is accessed. The Next Cache Index of this cache line is then updated to the index of the new cache line retrieved in step (116i) as per step (116xi), effectively preserving the order of messages being stored. In step (116xii), the SQN of the new cache line retrieved in step (116i) is set to the (Last SQN of the message lookup table + 1), and then the value of the Last SQN of the message lookup table is also incremented by 1. The Last Cache Index in the message lookup table (300) is then updated with the index of the most recently added cache line in step (116xx) and the check in step (116xxx) is performed.

On the other hand, if the message 200 had indeed previously been saved in the cache module (400) as message 200', it is preferable that the same message index in the lookup table (300) is used for consistency. If the message 200 had indeed previously been saved in the cache module (400) as message 200', in step (113), the "Message Count", "Next Cache Index", "Last Cache Index" and "Last SQN" are obtained from the lookup table (300) to find, respectively, the number of cache lines required, the location of the first cache line of message 200', the location of the last final cache line of message 200' and the last sequence number of the last part of the message. In step (116i), the location of the first cache line is obtained from "Next Cache Index" in table (300) and the first cache line is accessed. This first cache line may be cleared of message 200' or the first part of message 200' and the message 200 or the first part of message 200 may be stored in this first cache line in step (116ii). Accordingly, method (100) may further comprise clearing (130) the message 200' stored in the first cache line before the step (116ii) of storing the message 200 or part of the message 200 (not shown in Fig. 3) . The process continues as previously described. In step (116xxx), if more than one cache line is associated with message 200', the process goes back to step (116i) and the next cache line for storing message 200 may be obtained from the reference to the location of the next cache line in the first cache line. The next cache line may be cleared of the next part of message 200' and the next part of message 200 may be stored in this next cache line. The steps of obtaining the following cache line, clearing the following cache line and storing the following part of the message 200 are repeated until the last part of the message 200 is stored. If message 200 has a larger message count than message 200', the process goes back to step (116i) and the next cache line may be obtained by utilizing the algorithm to determine the location of the least significant bit of value 1. The process then proceeds accordingly and the status and binary value of the cache lines used are updated to "used" and "0", respectively, in the cache status bitmap. Thereafter in step (116xi), Next Cache Index in the previous cache line is updated to the location of this next cache line found by the algorithm and the details in this next cache line are also updated. The SQN of the final cache line and the Last SQN of the lookup table (300) are updated to the (previous SQN value+1) in step (116xii) . The Last Cache Index of the particular message index in the lookup table (300) is updated in step (116xx). The process continues until all information has been stored as per step (119).

An example (Example 1) is provided with reference to Figs. 2 and 3. Message 200 may be a temperature reading of 24°C from the temperature sensor, while message 200' may be a temperature reading of 27°C from the temperature sensor. Temperature sensor reading is stored in Message Index 2. When message 200 is received in step (110), the size of message 200 is determined in step (112) . The lookup table (300) is checked or scanned and it is determined that message 200 had previously been saved in the cache module (400) as message 200' in Message Index 2. The location of the first cache line of message 200' is obtained from lookup table (300) under Next Cache Index. Cache Index 5 is accessed and cleared of message 200' for storage of message 200.

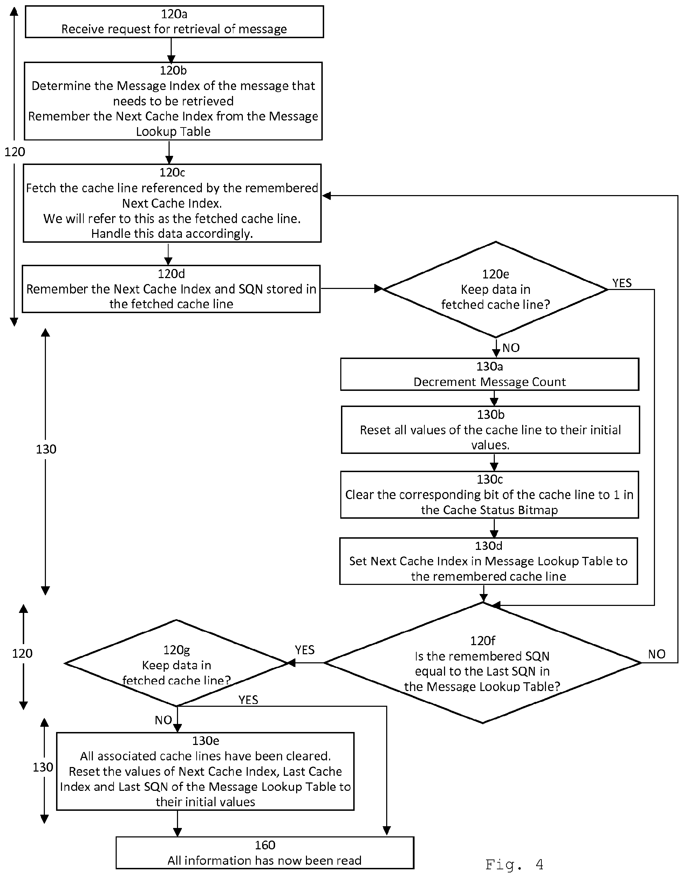

The method (100) comprises, among others, the step (120) of retrieving and the step (130) of clearing the stored message 200 from the cache module (400) according to the first embodiment of this invention. The steps (120) and (130) are now explained with reference to the flowchart in Fig. 4.

The process of step (120) broadly comprises: receiving (120a) a request for retrieval of the stored message 200; and retrieving (120c) the stored message 200 by means of the lookup table (300) .

Another example (Example 2) is provided with reference to Figs. 2 and 4. A seat control module requests for retrieval of an "unlock" message stored as message 200 in Message Index 0 in the cache module (400) of a door control module. The request is received by a processor of the door control module in step (120a) . Accordingly, the cache module (400) is part of an electronic control unit and the method (100) is undertaken by a processor of the electronic control unit. In step (120b), the door control module determines the message index of message 200 that needs to be retrieved, i.e. Message Index 0. The Next Cache Index from Message Index 0 is then remembered for message order preservation by saving it in a temporary location in processor memory, and this is referred to hereafter as "remembered cache index". The processor obtains the cache line referenced as Next Cache Index in Message Index 0 from lookup table (300), fetches the cache line, i.e. Cache Index 1, in step (120c) and retrieves the data in the fetched cache line. In step (120d), the Next Cache Index stored in Cache Index 1 is obtained, i.e. Cache Index 2, and the remembered cache index is replaced by Cache Index 2. Also in step (120d), the SQN stored in Cache Index 1 is remembered and this is referred to hereafter as "remembered SQN".

The processor of the door control unit may then make a decision in step (120e) to free up the data in Cache Index 1 or keep it for future access. If Cache Index 1 would be freed, the process of clearing step (130) is started. First, the Message Count in the message lookup table (300) is decremented by 1 in step (130a) and all values of Cache Index 1 are reset to default values in step (130b) . Then the corresponding bit in the cache status bitmap is set as "free" or "1" as per step (130c) . In step (130d), the message lookup table (300) is then updated to show that the Next Cache Index to be fetched is the remembered cache index from step (120d) . Accordingly, method (100) may comprise clearing (130) the message stored in Cache Index 1 after the step (120) of retrieving.

The remembered SQN is then compared with the Last SQN stored in the message lookup table (300) in step (120f). If they are the same, it means that all the information stored for this message index has been read or retrieved, otherwise the process repeats from step 120c.

Once all cache lines are confirmed to be read, and if the processor had decided to discard all data as per step (120e), the values in the message lookup table (300) are all reset to the initial invalid or INV values in step (130e). Otherwise, once all cache lines are confirmed to be read, the process of step (120) ends in step (160).

The method (100) of Example 2 is implemented as a computer program product residing on a non-transitory computer readable storage medium in the door control module, the non-transitory computer readable storage medium having a plurality of instructions stored thereon which, when executed by the processor of the door control module, cause the processor to perform the disclosed method (100) .

In Example 2, the door control module comprises: a processor configured to perform the disclosed method; computer readable storage medium comprising a non-transitory portion and a transitory portion, the non-transitory portion comprising the computer program product above and the transitory portion comprising the cache module (400); and circuitry configured to transmit the message 100 and at least one instruction.

The door control module and the seat control module of Example 2 are comprised in a vehicle control unit (not shown) and are in electronic communication with each other by way of a data bus system, e.g. a CAN bus or a LIN bus.

**Claims**

1.  A method (100) of operating a cache module (400) comprising cache lines which are the smallest memory blocks of the cache module (400), wherein the method (100) comprises a step (110) of receiving an incoming message for storing, the step (110) of receiving comprising:

    determining (112) size of the message to in turn determine number of cache lines required for the message;
    finding (116) available cache lines required for the determined number of cache lines, wherein the step (116) of finding comprises:

       i. utilizing (116i) an algorithm using a de Bruijn sequence to find an available first cache line by determining the location of a least significant bit of value 1 of an integer that is a binary representation of which cache lines are free or used, wherein the least significant bit of value 1 identifies the location of the available first cache line;
       ii. storing (116ii) the message or, if more than one cache line is required, part of the message in the first cache line in the cache module (400);
       iii. storing (116iii) the location of the first cache line in a lookup table (300) indexing details of the stored message;
       iv. repeating steps i to iii if more than one cache line is required for the message.

2.  The method (100) of claim 1, further comprising:

    receiving (120a) a request for retrieval of the stored message;
    retrieving (120c) the stored message by means of the lookup table (300).

3.  The method (100) of claim 1 or 2, further comprising clearing (130) the message stored in the at least one cache line after the step of retrieving.

4.  The method (100) of claim 1 or 2, further comprising clearing (130) the message stored in the at least one cache line before the step (116ii) of storing the message or part of the message.

5.  The method (100) of any preceding claim, wherein the lookup table (300) further comprises a bitmap indicating which cache lines are available or used.

6.  The method (100) of any preceding claim, wherein the cache module (400) is part of an electronic control unit.

7.  The method (100) of claim 6, wherein the method (100) is undertaken by a processor of the electronic control unit.

8.  An electronic control unit comprising:

    a processor configured to perform the method (100) of any one of claims 1-7;
    computer readable storage medium comprising a non-transitory portion and a transitory portion,

       - the non-transitory portion comprising a computer program comprising a plurality of instructions which, when executed by the processor of the electronic control unit, cause the processor to perform the method (100) of any one of claims 1-7, and
       - the transitory portion comprising the cache module (400) ; and

    circuitry configured to transmit at least one message and at least one instruction.

9. A vehicle control unit comprising a plurality of electronic control units of claim 8 in electronic communication with each other by way of a data bus system.

10. The vehicle control unit of claim 9, wherein the data bus system comprises a CAN bus or a LIN bus.

**Patentansprüche**

1. Verfahren (100) zum Betreiben eines Cache-Moduls (400), das Cache-Zeilen aufweist, die die kleinsten Speicherblöcke des Cache-Moduls (400) sind, wobei das Verfahren (100) einen Schritt (110) des Empfangens einer ankommenden Nachricht zum Speichern aufweist, wobei der Schritt (110) des Empfangens aufweist:

   Bestimmen (112) der Größe der Nachricht, um wiederum die Anzahl der für die Nachricht erforderlichen Cache-Zeilen zu bestimmen;
   Auffinden (116) verfügbarer Cache-Zeilen, die für die bestimmte Anzahl von Cache-Zeilen erforderlich sind, wobei der Schritt (116) des Auffindens aufweist:

   i. Verwenden (116i) eines Algorithmus unter Verwendung einer de Bruijn-Folge, um eine verfügbare erste Cache-Zeile durch Bestimmen der Position eines niedrigstwertigen Bits des Werts 1 einer Ganzzahl zu finden, die eine binäre Repräsentation dessen ist, welche Cache-Zeilen frei sind oder verwendet werden, wobei das niedrigstwertige Bit des Werts 1 die Position der verfügbaren ersten Cache-Zeile identifiziert;
   ii. Speichern (116ii) der Nachricht oder, wenn mehr als eine Cache-Zeile erforderlich ist, eines Teils der Nachricht in der ersten Cache-Zeile im Cache-Modul (400);
   iii. Speichern (116iii) der Position der ersten Cache-Zeile in einer Nachschlagetabelle (300), die Einzelheiten der gespeicherten Nachricht indexiert;
   iv. Wiederholung der Schritte i bis iii, wenn mehr als eine Cache-Zeile für die Nachricht erforderlich ist.

2. Verfahren (100) nach Anspruch 1, das ferner aufweist: Empfangen (120a) einer Anforderung zum Abruf der gespeicherten Nachricht;
   Abrufen (120c) der gespeicherten Nachricht mit Hilfe der Nachschlagetabelle (300).

3. Verfahren (100) nach Anspruch 1 oder 2, das ferner das Löschen (130) der in der mindestens einen Cache-Zeile gespeicherten Nachricht nach dem Schritt des Abrufens aufweist.

4. Verfahren (100) nach Anspruch 1 oder 2, das ferner das Löschen (130) der in der mindestens einen Cache-Zeile gespeicherten Nachricht vor dem Schritt (116ii) des Speicherns der Nachricht oder eines Teils der Nachricht aufweist.

5. Verfahren (100) nach einem der vorhergehenden Ansprüche, wobei die Nachschlagetabelle (300) ferner eine Bitmap aufweist, die angibt, welche Cache-Zeilen verfügbar sind oder verwendet werden.

6. Verfahren (100) nach einem der vorhergehenden Ansprüche, wobei das Cache-Modul (400) Teil einer elektronischen Steuereinheit ist.

7. Verfahren (100) nach Anspruch 6, wobei das Verfahren (100) von einem Prozessor der elektronischen Steuereinheit unternommen wird.

8. Elektronische Steuereinheit, aufweisend:

   einen Prozessor, der zum Durchführen des Verfahrens (100) nach einem der Ansprüche 1-7 ausgebildet ist;
   computerlesbares Speichermedium, das einen nichtflüchtigen Teil und einen flüchtigen Teil aufweist,

   - wobei der nichtflüchtige Teil ein Computerprogramm aufweist, das eine Mehrzahl von Anweisungen aufweist, die, wenn sie von dem Prozessor der elektronischen Steuereinheit ausgeführt werden, den Prozessor veranlassen, das Verfahren (100) nach einem der Ansprüche 1-7 durchzuführen, und
   - wobei der flüchtige Teil das Cache-Modul (400) aufweist; und eine Schaltungsanordnung, die zum Übertragen mindestens einer Nachricht und mindestens einer Anweisung ausgebildet ist.

9. Fahrzeugsteuereinheit, die eine Mehrzahl von elektronischen Steuereinheiten nach Anspruch 8 aufweist, die über ein Datenbussystem miteinander in elektronischer Kommunikation stehen.

10. Fahrzeugsteuereinheit nach Anspruch 9, wobei das Datenbussystem einen CAN-Bus oder einen LIN-Bus aufweist.

**Revendications**

1. Procédé (100) de fonctionnement d'un module de cache (400) comprenant des lignes de cache qui sont les plus petits blocs de mémoire du module de cache (400), le procédé (100) comprenant une étape (110) de réception d'un message entrant à stocker, l'étape (110) de réception comprenant :

la détermination (112) de la taille du message pour ensuite déterminer le nombre de lignes de cache requises pour le message ;
la recherche (116) de lignes de cache disponibles requises pour le nombre déterminé de lignes de cache, l'étape (116) de recherche comprenant :

i. l'utilisation (116i) d'un algorithme utilisant une séquence de de Bruijn pour trouver une première ligne de cache disponible en déterminant l'emplacement d'un bit de poids faible de valeur 1 d'un entier qui est une représentation binaire dont les lignes de cache sont libres ou utilisées, le bit de poids faible de valeur 1 identifiant l'emplacement de la première ligne de cache disponible ;
ii. le stockage (116ii) du message ou, si plus d'une ligne de cache est requise, d'une partie du message dans la première ligne de cache du module de cache (400) ;
iii. le stockage (116iii) de l'emplacement de la première ligne de cache dans une table de consultation (300) indexant des détails du message stocké ;
iv. la répétition des étapes i à iii si plus d'une ligne de cache est requise pour le message.

2. Procédé (100) selon la revendication 1, comprenant en outre :

la réception (120a) d'une demande de récupération du message stocké ;
la récupération (120c) du message stocké au moyen de la table de consultation (300).

3. Procédé (100) selon la revendication 1 ou 2, comprenant en outre l'effacement (130) du message stocké dans l'au moins une ligne de cache après l'étape de récupération.

4. Procédé (100) selon la revendication 1 ou 2, comprenant en outre l'effacement (130) du message stocké dans l'au moins une ligne de cache avant l'étape (116ii) de stockage du message ou d'une partie du message.

5. Procédé (100) selon n'importe quelle revendication précédente, dans lequel la table de consultation (300) comprend en outre une image bitmap indiquant les lignes de cache qui sont disponibles ou utilisées.

6. Procédé (100) selon n'importe quelle revendication précédente, dans lequel le module de cache (400) fait partie d'une unité de commande électronique.

7. Procédé (100) selon la revendication 6, le procédé (100) étant réalisé par un processeur de l'unité de commande électronique.

8. Unité de commande électronique comprenant :

un processeur configuré pour réaliser le procédé (100) selon l'une quelconque des revendications 1 à 7 ;
un support de stockage lisible par ordinateur comprenant une partie non transitoire et une partie transitoire,

- la partie non transitoire comprenant un programme d'ordinateur comprenant une pluralité d'instructions qui, à leur exécution par le processeur de l'unité de commande électronique, amènent le processeur à réaliser le procédé (100) selon l'une quelconque des revendications 1 à 7, et
- la partie transitoire comprenant le module de cache(400) ; et

des circuits configurés pour transmettre au moins un message et au moins une instruction.

9. Unité de commande de véhicule comprenant une pluralité d'unités de commande électronique selon la revendication 8 en communication électronique entre elles au moyen d'un système de bus de données.

10. Unité de commande de véhicule selon la revendication 9, dans laquelle le système de bus de données comprend un bus CAN ou un bus LIN.

Fig. 1

Fig. 2

**112**
Determine which message index and number of cache lines needed to store message 200

**113**
Get Message Count, Next Cache Index, Last Cache Index and Last SQN for this message index

**116i**
Find available cache line by using the Cache Status Bitmap with the Lookup and Multiply Table 300

**116ii, 116iii**
Set the message index of the cache index.
Copy all data that can fit to the cache line's buffer.
Increment Message Count.
Set the corresponding bit of the cache line to 0 in the Cache Status Bitmap.

**116iv**
Message Count > 1?

YES

**116x**
Access the cache line contained in the Last Cache Index in the Message Lookup Table

**116xi**
Set the Next Cache Index of this cache line to the index of the available cache line

**116xii**
Set the SQN of the available cache line to the Last SQN value in the Message Lookup Table plus 1.
Set the Last SQN in the Message Lookup Table to this value as well.

NO

**116v**
Set Next Cache Index in Message Lookup Table to the index of the available cache line

**116vi**
Set the SQN of the available cache line to 1
Set the Last SQN in the Message Lookup Table to 1

**116xx**
Set Last Cache Index in Message Lookup Table to the index of the cache line retrieved

**116xxx**
All information stored?

No

Yes

**119**
All information stored

Fig. 3

110

15

**120a**
Receive request for retrieval of message

**120b**
Determine the Message Index of the message that needs to be retrieved
Remember the Next Cache Index from the Message Lookup Table

**120**

**120c**
Fetch the cache line referenced by the remembered Next Cache Index.
We will refer to this as the fetched cache line.
Handle this data accordingly.

**120d**
Remember the Next Cache Index and SQN stored in the fetched cache line

**120e**
Keep data in fetched cache line?

YES

NO

**130a**
Decrement Message Count

**130b**
Reset all values of the cache line to their initial values.

**130**

**130c**
Clear the corresponding bit of the cache line to 1 in the Cache Status Bitmap

**130d**
Set Next Cache Index in Message Lookup Table to the remembered cache line

**120**

**120g**
Keep data in fetched cache line?

YES

**120f**
Is the remembered SQN equal to the Last SQN in the Message Lookup Table?

NO

YES

NO

**130**

**130e**
All associated cache lines have been cleared.
Reset the values of Next Cache Index, Last Cache Index and Last SQN of the Message Lookup Table to their initial values

**160**
All information has now been read

Fig. 4

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003005230 A1
- US 2009276602 A1

- US 2008148002 A1

**Non-patent literature cited in the description**

- **CHARLES E. LEISERSON ; HARALD PROKOP ; KEITH H. RANDALL.** Using de Bruijn Sequences to Index a 1 in a Computer Word. MIT Laboratory for Computer Science, 07 July 1998